Europäisches Patentamt

European Patent Office

Office européen des brevets

(11) Veröffentlichungsnummer: **0 004 053**
**A2**

## (12) EUROPÄISCHE PATENTANMELDUNG

(21) Anmeldenummer: 79100646.3

(22) Anmeldetag: 05.03.79

(51) Int. Cl.²: **C 08 L 67/00**
**C 08 L 61/20, C 08 L 61/28**
**C 04 B 43/02, C 03 C 25/02**

(30) Priorität: 09.03.78 DE 2810137

(43) Veröffentlichungstag der Anmeldung:
19.09.79 Patentblatt 79/19

(84) Benannte Vertragsstaaten:
BE DE FR IT

(71) Anmelder: CASSELLA Aktiengesellschaft
Hanauer Landstrasse 526
D-6000 Frankfurt am Main 61(DE)

(72) Erfinder: Adam, Wilhelm, Dr.
Schwabenstrasse 15
D-6078 Neu-Isenburg(DE)

(74) Vertreter: Urbach, Hans-Georg, Dr. et al,
Hanauer Landstrasse 526
D-6000 Frankfurt am Main 61(DE)

(54) Binder für die Herstellung von Dämmstoffen und Verfahren zur Herstellung von Dämmstoffen.

(57) Der Binder für die Herstellung von Dämmstoffen aus Fasermaterialien besteht aus einer 5 bis 80 gew.%igen Lösung einer Mischung eines wasserlöslichen aminoharzvernetzenden Polyesters und eines wasserlöslichen Melaminharzes im Gewichtsverhältnis 1 : (9 bis 0,1), der zur Herstellung von Dämmstoffen aus Fasermaterialien in einer Menge von 2 bis 10 Gew.%, bezogen auf das Festharzgemisch, in Form einer 5 bis 50 gew.%igen Lösung auf die Fasern aufgesprüht wird, wonach das imprägnierte Material bei erhöhter Temperatur behandelt wird.

EP 0 004 053 A2

0004053

Ref. 3117 Dr.Eu/L1

## Binder für die Herstellung von Dämmstoffen und Verfahren zur Herstellung von Dämmstoffen

Die Erfindung betrifft einen Binder zur Herstellung von Dämmstoffen in Form von Vliesen, Filzen, Matten, Platten und dgl. aus Fasermaterialien, insbesondere aus Glasfasern.

Bei der Herstellung von Dämmstoffen aus Glasfasern ist es bekannt, auf die Glasfasern ein Phenolharz aufzubringen und das so vorbereitete Fasermaterial unter Anwendung von erhöhter Temperatur und gegebenenfalls erhöhtem Druck z.B. zu Vliesen, Matten, Platten oder dgl. zu verfestigen. Nachteilig bei dieser Arbeitsweise ist, daß bei den zur Verfestigung des Fasermaterials zur Anwendung kommenden Bedingungen von der Glasfaser Phenolharz in Form eines Rauchs absublimiert und eine unerwünschte Abluftbelastung hervorruft.

Der erfindungsgemäße Binder zur Herstellung von Dämmstoffen in Form von Vliesen, Filzen, Matten, Platten und dgl. aus Fasermaterialien, insbesondere aus Glasfasern, besitzt nicht die Nachteile der bisher üblichen Vliesbinder. Der erfindungsgemäße Binder besteht aus einer Mischung eines wasserlöslichen aminoharzvernetzenden Polyesters und eines wasserlöslichen Melaminharzes im Gewichtsverhältnis von 1 : (9 bis 0,1). Insbesondere besitzt der wasserlösliche aminoharzvernetzende Polyester dabei eine OH-Zahl von 30 bis 450, vorzugsweise von 80 bis 200, eine Säurezahl von 20 bis 300, vorzugsweise 60 bis 100, und - gemessen in 50 gew.%iger Lösung in Butylglykol - eine dynamische Viskosität von 100 bis 750 mPa·s. Derartige Polyester sind bekannt und werden durch Polykondensation zweiwertiger Dicarbonsäuren und zweiwertiger Alkohole hergestellt, wobei auch geringe Mengen drei-und mehrwertiger Carbonsäuren und/oder Alkohole anwesend sein können. Bei der Polykondensation können auch Derivate der Carbonsäuren und Alkohole, insbesondere Ester mit niederen Alkoholen, Säurechloride, Anhydride oder Lactone eingesetzt werden.

Geeignete zweibasische Carbonsäuren oder deren Derivate sind beispielsweise Phthalsäure, Phthalsäureanhydrid, Isophthalsäure, Terephthalsäure, Tetrahydrophthalsäure, Hexahydrophthalsäure, Endomethylen-Tetrahydrophthalsäureanhydrid, Hexachloroendomethylen-Tetrahydrophthalsäure-anhydrid, Bernsteinsäure, Glutarsäure, Adipinsäure, Pimelinsäure, Korksäure, Azelainsäure, Sebacinsäure.

Geeignete ungesättigte zweibasische Carbonsäuren bzw. deren Derivate sind beispielsweise: Maleinsäureanhydrid, Fumarsäure, Itaconsäure, Citraconsäure, Mesaconsäure.

Geeignete Glykole für die Herstellung der Polyester sind beispielsweise:Äthylenglykol, Propylenglykol-(1,2),Propylenglykol-(1,3), Butylenglykol-(1,2), Butylenglykol-(1,3); Butylenglykol-(1,4); Diäthylenglykol, Dipropylenglykol, Triäthylenglykol, 1,5-Pentandiol, 1,6-Hexandiol, Hexylenglykol (=2-Methyl-2,4-pentandiol), Neopentylglykol (=2,2-Dimethyl-1,3-propandiol).

Durch Einbau einer geringen Menge von drei- oder mehrwertigen Carbonsäuren und/oder Alkoholen kann eine Verzweigung bzw. Vernetzung des Polyesters erreicht werden. Hierfür sind beispielsweise Trimethylolpropan, Trimethyloläthan, 1,2,6-Hexantriol, Glyzerin, Pentaerithrit geeignet.

Es sind besonders solche Polyester geeignet, bei denen die Polycarbonsäurekomponente ganz oder zum Teil aus aliphatischen Dicarbonsäuren, insbesondere Adipin-, Bernstein-, Sebacin- oder Azelainsäure besteht.

Der Polyester kann gegebenenfalls auch durch einen Gehalt an Monocarbonsäuren modifiziert sein. Bei den zur Anwendung kommenden Polyestern handelt es sich nicht um lufttrocknende Systeme. Die Bedingung "wasserlöslich" im Zusammenhang mit dem Polyester bedeutet, daß der Polyester bei pH-Werten über 7 in Wasser gelöst werden kann. Die Bedingung "wasserlöslich" im Zusammenhang
mit dem Melaminharz bedeutet, daß das Melaminharz bei den zur
Herstellung des Binders vorkommenden Bedingungen, insbesondere
den vorkommenden Mengenverhältnissen, in Wasser löslich sein
muß.

Unter den zur Herstellung des erfindungsgemäßen Binders geeigneten Melaminharzen sind einkernige, teilweise oder vollkommen
methylolierte Melamine, deren Methylolgruppen unveräthert oder
mit mindestens einem ein- oder mehrwertigen aliphatischen Alkohol mit 1 bis 6 C-Atomen teilweise oder vollkommen veräthert
sind, oder entsprechende mehrkernige, begrenzt oder unbegrenzt
wasserverdünnbare Melamin-Formaldehyd-Vorkondensate mit einem
Molverhältnis Melamin : Formaldehyd von 1 : 1 bis 1 : 6, die
unveräthert oder mit mindestens einem ein- oder mehrwertigen
aliphatischen Alkohol mit 1 bis 6 C-Atomen teilweise oder vollständig veräthert sind, oder ein Gemisch der genannten unverätherten und/oder verätherten einkernigen Methylolmelamine und/
oder unverätherten oder verätherten mehrkernigen Melamin-Formaldehyd-Vorkondensate zu verstehen.

Geeignete Melaminharze sind beispielsweise Dimethylolmelamin,
Trimethylolmelamin, Tetramethylolmelamin, Pentamethylolmelamin,
Hexamethylolmelamin oder deren Gemische oder ein Dimethylolmelamin, Trimethylolmelamin, Tetramethylolmelamin,Pentamethylolmelamin oder Hexamethylolmelamin, dessen Methylolgruppen mit mindestens einem ein- oder mehrwertigen aliphatischen Alkohol mit
1 bis 6 C-Atomen, vorzugsweise 1 bis 4 C-Atomen, teilweise oder
vollkommen veräthert ist. Der ein- oder mehrwertige aliphatische
Alkohol kann dabei gesättigt oder ungesättigt sein, und seine
Kohlenstoffkette kann auch durch eine oder mehrere Ätherbrücken
unterbrochen sein. Geeignete Alkohole sind beispielsweise
Methanol, Äthanol, n-Propanol, iso-Propanol, n-Butanol, iso-
Butanol, n-Pentanol, iso-Pentanol, n-Hexanol, iso-Hexanol,
Allylalkohol, Äthylenglykol, Propylenglykol, Butandiole, wie
Butandiol-1,4, Hexandiole, wie Hexandiol-1,6, Diäthylenglykol,
Triäthylenglykol, Dipropylenglykol, Glyzerin.

Methanol wird als aliphatischer Alkohol bevorzugt. Bevorzugte Melaminharze sind Trimethylolmelamin-trimethyläther, Hexamethy-lolmelamin-hexamethyläther oder Pentamethylolmelamin-trimethyl-äther.

Geeignete Melaminharze sind auch begrenzt oder unbegrenzt wasserverdünnbare, mehrkernige Melamin-Formaldehyd-Vorkondensate (nachstehend mehrkernige Methylolmelamine genannt) mit einem Molverhältnis von Melamin-Formaldehyd von 1 : 1 bis 1 : 6. Das mehrkernige Melamin-Formaldehyd-Vorkondensat kann auch mit den genannten Alkoholen teil- oder vollveräthert sein. Die ein- und mehrkernigen Methylolmelamine können auch die in der Aminoplastchemie üblichen Modifizierungsmittel in Mengen von etwa 2 bis 20 Gew.%, bezogen auf einkerniges oder mehrkerniges Methylolmelamin, enthalten. Solche Modifizierungsmittel sind beispielsweise Sorbit, Zucker, Lactam, wie z.B. ε-Aminocaprolactam, Methylenbisformamid, Toluolsulfonamide, wie z.B. p-Toluolsulfonamid. Eine derartige Modifizierung ist jedoch nicht unbedingt erforderlich.

Polyester und Melaminharz werden zweckmäßigerweise in einem geeigneten wasserverdünnbaren organischen Lösungsmittel oder Lösungsmittelgemisch, vorzugsweise jedoch in Wasser im Gewichtsverhältnis 1 : (9 bis 0,1), vorzugsweise im Gewichtsverhältnis 1 : (8 bis 1) miteinander gemischt (fest auf fest gerechnet). Für die Liefer- oder Handelsform wird eine möglichst konzen-trierte Lösung des Binders, beispielsweise 50 bis 80 gew.%ig, hergestellt. Während der Mischung wird ein pH-Wert von 7 bis 11, vorzugsweise 9,2 bis 9,6, durch Zugabe von Alkali aufrechterhalten, wobei die pH-Wert-Einstellung bevorzugt mit wäßriger Ammoniaklösung oder organischen Aminen durchgeführt wird.

Geeignete organische Amine sind beispielsweise Methylamin, Trimethylamin, Äthylamin, Diäthylamin, Triäthylamin, n-Propylamin, Di-n-propylamin, i-Propylamin, Äthylendiamin, Allylamin, n-Butyl-amin, Di-n-Propylamin, wobei die flüchtigen Amine in Form von Lösungen, vorzugsweise wäßrigen Lösungen, angewandt werden. Selbstverständlich können aber auch die bei normaler Temperatur flüssigen Amine in Form von Lösungen eingesetzt werden.

Es ist vorteilhaft, für die pH-Wert-Einstellung solche organischen Amine zu verwenden, die einen Siedepunkt von 130 bis 200°C besitzen, wie z.B. Äthanolamin, Trimethylendiamin, Pentamethylendiamin, Hexamethylendiamin, Tri-n-propylamin und vorzugsweise Dimethyläthanolamin.

Geeignete wasserverdünnbare organische Lösungsmittel sind beispielsweise Alkohole, wie Methanol, Äthanol, i-Propanol, Ketone, wie Aceton, Methyläthylglykol, Glykole, wie Äthylenglykol, Diäthylenglykol.

Zur Herstellung von Dämmstoffen in Form von Vliesen, Filzen, Matten, Platten und dgl. aus Fasermaterialien, insbesondere aus Glasfasern unter Verwendung des erfindungsgemäßen Binders, werden die Substrate in bekannter Weise hergestellt und an einer geeigneten Stelle des Herstellungsprozesses der erfindungsgemäße Binder in Mengen von 2 bis 10 Gew.%, vorzugsweise 4 bis 6 Gew.%, bezogen auf das Festharzgemisch in Form einer 5 bis 50 gew.%igen Lösung möglichst gleichmäßig auf die Fasern aufgebracht, beispielsweise aufgesprüht. (Die Einstellung des Binders auf die Anwendungskonzentration erfolgt vorzugsweise durch Verdünnen mit Wasser.) Die Aushärtung des Binders und die Bildung des gegebenenfalls verfestigten Dämmstoffes erfolgt dadurch, daß das mit dem Binder imprägnierte Fasermaterial während einer Dauer von 1 bis 10 Minuten einer Temperatur von 150 bis 225°C ausgesetzt und gegebenenfalls gleichzeitig bei Drucken von 45 bis 300 kPa verdichtet wird. Die Herstellung der Dämmstoffe kann diskontinuierlich oder kontinuierlich erfolgen, wobei man normalerweise der kontinuierlichen Arbeitsweise den Vorzug geben wird. So können z.B. Glasfasern aus der ca. 1200 bis 1400°C heißen Glasschmelze mittels eines bekannten Schleuder- oder Düsenblasverfahrens kontinuierlich hergestellt werden. Bei einem der Schleuderverfahren z.B. fließt ein dünner Strahl der Glasschmelze auf eine beheizte, sich rasch horizontal mit Umdrehungsgeschwindigkeiten von 3000 bis 4000 U/min drehende Scheibe von ca. 20 cm Durchmesser. Diese Scheibe besitzt axiale Leitrillen, über die das Glas abgeschleudert und zu Fasern ausgezogen wird. Üblicherweise wird mit einem auf die rotierende Scheibe gerichteten Luft- oder Gasstrom das Ausziehen der Glasfasern unterstützt. Der Luft- oder Gasstrom bläst die gebildeten Glasfasern auf eine Absaugvorrichtung, die aus einem endlosen Siebband gebildet wird, auf dem die Glasfasern zu einem Vlies oder Filz abgelegt werden. Während des Fluges der Glasfasern von der rotierenden Scheibe zu der Absaugvorrichtung in einem Abschnitt, in dem zweckmäßigerweise eine Temperatur von 100 bis 150°C herrscht, kann der erfindungsgemäße Binder auf die Glasfasern aufgesprüht werden und dadurch eine gleichmäßige Imprägnierung der abgelegten Glasfasern erreicht werden. Die Absaugvorrichtung saugt den Luft- oder Gasstrom durch das Siebband ab. Das auf dem Siebband abgelegte, imprägnierte Glasfaservlies wird weitertransportiert und gelangt in eine Härtezone, in der es, gegebenenfalls unter gleichzeitiger Verdichtung zwischen zwei parallel laufenden Bändern bei Drucken von 45 bis 300 kPa, einer Temperatur von 150 bis 225°C ausgesetzt wird, bei welcher der Binder aushärtet. Das gebundene Material wird nach Verlassen der Härtezone aufgerollt bzw. auf die gewünschte Länge geschnitte

In manchen Fällen bilden sich an den Düsen, durch welche die Lösung des Binders auf die vorbeifliegenden Glasfasern aufgesprüht wird und die einer Temperatur von 100 bis 150°C ausgesetzt wird, unerwünschte Ablagerungen, die sich an den Düsen zu störenden Glasfaserzöpfen auswachsen.Die Bildung derartige Ablagerungen und Zöpfe kann durch Zumischung eines mit dem Binder verträglichen Lösungsmittels, dessen Siedepunkt bei 150 bis 200°C liegt, verhindert werden. Normalerweise ist es ausreichend, dem erfindungsgemäßen Binder bis zu 10 Gew.% hochsiedendes Lösungsmittel, bezogen auf Festharzgemisch, zuzusetzen. Als hochsiedendes organisches Lösungsmittel hat sich besonders Butyldiglykol bewährt.

Für die Aushärtung des erfindungsgemäßen Binders ist kein Härter erforderlich, so daß auch die Beachtung einer Topfzeit wegfällt. Die Lagerstabilität der normalerweise 50 gew.%igen Lieferform als auch der auf Anwendungskonzentration von 5 bis 50 gew.%igen verdünnten Imprägnierflotte beträgt mehr als 1/3 Jahr. Gegenüber den bisher für diesen Zweck bekannten Phenolharzen tritt eine wesentlich geringere Abluftbelastung auf. Die mit dem erfindungsgemäßen Binder hergestellten Dämmstoffe erfüllen die gestellten Anforderungen, insbesondere an Wärme- und Wasserdampffestigkeit. Glasfaserplatten, die mit dem erfindungsgemäßen Binder hergestellt worden sind, zeigen auch die geforderte Sprungelastizität.

Der erfindungsgemäße Binder kann auch zur Herstellung von Dämmstoffen aus anderen Fasern, wie beispielsweise Schlackenfasern und Steinwolle, benutzt werden. Aus diesen Materialien können ebenso wie aus Glasfasern Vliese, Filze, Matten oder Platten hergestellt werden.

<u>Beispiel</u>

1,280 kg Trimethylolmelamintrimethyläther, 75%ig in Wasser, 250 l Wasser, 60 kg Butyldiglykol, 50 kg Dimethyläthanolamin und 300 kg eines Polyesterharzes, dessen Herstellung nachstehend beschrieben ist und das in Form einer 80 gew.%igen Lösung in einem Lösungsmittelgemisch, bestehend aus 1 Gew.Teil Äthylglykol, 2 Gew.Teilen Butylglykol und 2 Gew.Teilen Isobutanol, vorliegt, werden zu einer klaren Lösung gemischt. Dieser Binder wird mit 460 l Wasser auf Lieferkonzentration verdünnt. Der pH-Wert beträgt 9,4.

Die vorstehende Tränkflotte wird auf soeben hergestellte, sich im Flug befindende Glasfasern bei einer Temperatur von 100°C gleichmäßig aufgesprüht. Die aufgesprühte Menge beträgt 4 Gew%. Anschließend werden die besprühten Glasfasern zu einem Vlies abgelagert und bei einem Druck von 275 kPa zu einer 3 cm dicken Platte verdichtet. Die hergestellte Glasfaserplatte erfüllte alle erforderlichen Anforderungen, insbesondere war der ausgehärtete Binder wärme- und wasserdampffest, und die Platte war im hohen Grade elastisch.

Das vorstehend genannte Alkydharz wurde wie folgt hergestellt:

148 kg Phthalsäureanhydrid

219 kg Adipinsäure

 49 kg Maleinsäureanhydrid

155 kg Äthylenglykol

 68 kg Pentaerythrit

wurden 4 1/2 h lang kondensiert, wobei die Temperatur von 125°C auf 185°C anstieg und 65 kg Destillat erhalten wurden, das aus 60 kg Wasser und 5 kg Äthylenglykol bestand. Die Ausbeute an Polyester betrug 574 kg. Der Festkörpergehalt des Polyesters betrug praktisch 100 Gew.% (bestimmt durch einstündiges Erhitzen einer 1 g Probe auf 140°C), die OH-Zahl wurde zu 181 und die Säurezahl zu 96 mg KOH/g bestimmt. Die Viskosität einer 50 gew.%igen Lösung in Butylglykol betrug 132 mPa·s.

Der erhaltene Polyester wurde in 29,3 kg Äthylglykol, 58,6 kg Butylglykol und 58,6 kg Isobutanol zu einer 80gew.%igen Lösung gelöst, die eine Viskosität von 3,48 Pa·s besaß.

# PATENTANSPRÜCHE

1.Binder für die Herstellung von Dämmstoffen aus Fasermaterialien, bestehend aus einer 5 bis 80 gew.%igen Lösung
einer Mischung eines wasserlöslichen aminoharzvernetzenden
Polyesters und eines wasserlöslichen Melaminharzes im Gewichtsverhältnis 1 : (9 bis 0,1).

2. Binder nach Anspruch 1, dadurch gekennzeichnet, daß die
Mischung des Polyesters und des Melaminharzes in wäßriger
Lösung mit einem pH-Wert von 7 bis 11 vorliegt.

3. Binder nach Anspruch 2, dadurch gekennzeichnet, daß
die Lösung einen pH-Wert von 9,2 bis 9,6 besitzt.

4. Binder nach den Ansprüchen 1 bis 3, dadurch gekennzeichnet, daß der Polyester eine OH-Zahl von 30 bis 450, eine
Säurezahl von 20 bis 300 und, in 50 gew.%iger Lösung in
Butylglykol, eine dynamische Viskosität von 100 bis 750
mPa·s besitzt.

5. Binder nach den Ansprüchen 1 bis 4, dadurch gekennzeichnet, daß der Polyester eine OH-Zahl von 80 bis 200 und
eine Säurezahl von 60 bis 100 besitzt.

6. Binder nach den Ansprüchen 1 bis 5, dadurch gekennzeichnet, daß das Melaminharz aus einem einkernigen, teilweise
oder vollkommen methylolierten Melamin, dessen Methylolgruppen unveräthert oder mit mindestens einem ein- oder
mehrwertigen aliphatischen Alkohol mit 1 bis 6 C-Atomen
teilweise oder vollkommen veräthert ist, oder aus einem
entsprechenden mehrkernigen, begrenzt oder unbegrenzt
wasserverdünnbaren Melamin-Formaldehyd-Vorkondensat mit
einem Molverhältnis Melamin : Formaldehyd von 1 : 1 bis
1 : 6, das unveräthert oder mit mindestens einem ein- oder
mehrwertigen aliphatischen Alkohol mit 1 bis 6 C-Atomen
teilweise oder vollständig veräthert ist, besteht.

7. Binder nach den Ansprüchen 1 bis 6, dadurch gekennzeichnet, daß das Melaminharz aus Dimethylolmelamin, Trimethylolmelamin, Tetramethylolmelamin, Pentamethylolmelamin oder Hexamethylolmelamin, dessen Methylolgruppen mit mindestens einem ein- oder mehrwertigen aliphatischen Alkohol mit 1 bis 6 C-Atomen teilweise oder vollkommen veräthert ist oder aus Dimethylolmelamin, Trimethylolmelamin, Tetramethylolmelamin, Pentamethylolmelamin oder Hexamethylolmelamin oder einem Gemisch dieser Substanzen besteht.

8. Binder nach den Ansprüchen 1 bis 7, dadurch gekennzeichnet, daß das Melaminharz aus einem begrenzt oder unbegrenzt wasserverdünnbaren mehrkernigen Melamin-Formaldehyd-Vorkondensat mit einem Mol-Verhältnis von Melamin : Formaldehyd von 1 : 1 bis 1 : 6 besteht, das auch durch mindestens einen ein- oder mehrwertigen aliphatischen Alkohol mit 1 bis 6 C-Atomen teil- oder vollveräthert sein kann.

9. Binder nach den Ansprüchen 1 bis 8, gekennzeichnet durch einen zusätzlichen Gehalt von bis zu 10 Gew.%, bezogen auf das Festharzgemisch an einem organischen Lösungsmittel mit einem Siedepunkt von 150 bis 200°C.

10. Verfahren zur Herstellung von Dämmstoffen aus Fasermaterialien, wobei auf die Fasern ein Bindemittel aufgesprüht und das imprägnierte Material bei erhöhter Temperatur behandelt wird, dadurch gekennzeichnet, daß auf die Fasern 2 bis 10 Gew.% Binder, bezogen auf das Festharzgemisch in Form einer 5 bis 50 gew.%igen Lösung des Binders der Ansprüche 1 bis 9 aufgesprüht wird.

11. Verfahren nach Anspruch 10, dadurch gekennzeichnet, daß die Aufsprühung bei einer Temperatur von 100 bis 150°C erfolgt.

12. Verfahren nach den Ansprüchen 10 und 11, dadurch gekennzeichnet, daß das imprägnierte Material 1 bis 10 Minuten lang bei einer Temperatur von 150 bis 225°C und bei einem Druck von 45 bis 300 kPa ausgehärtet wird.